# EUROPEAN PATENT SPECIFICATION

(11) **EP 1 719 334 B1**
(45) Date of publication and mention of the grant of the patent: **01.04.2009**
(21) Application number: 05702492.9
(22) Date of filing: 14.02.2005
(51) Int. Cl.: H04M 1/02, H04B 1/38

(54) **HANDLE FOR A MOBILE STATION AND A METHOD OF ATTACHING A HANDLE TO A MOBILE STATION**
GRIFF FÜR EINE MOBILSTATION UND VERFAHREN ZUM ANBRINGEN EINES GRIFFS AN EINER MOBILSTATION
POIGNEE POUR STATION MOBILE ET PROCEDE DE FIXATION D'UNE POIGNEE A UNE STATION MOBILE

(30) Priority: 19.02.2004 US 782317
(43) Date of publication of application: 08.11.2006
(73) Proprietor: Nokia Corporation, 02150 Espoo (FI)
(72) Inventor: GARTRELL, Andrew, Julian, Tarzana, CA 91356 (US); SHAW, Steven, Arthur, Plano, TX 75024 (US)
(74) Representative: Read, Matthew Charles
(86) International application number: PCT/IB2005/000365
(87) International publication number: WO 2005/083989

(56) References cited:
- EP-A1- 0 993 068
- WO-A1-01/22526
- US-B1- 6 188 362

## Description

### BACKGROUND

### Field of the Invention

The present invention is related to the field of mobile stations, and more particularly to the field of tethers, handles and other accessories that facilitate transport of mobile stations.

### Description of Related Art

Participants in the mobile telephone industry are in a constant search to differentiate their telephones by making them easier to use and more aesthetically appealing. For example, accessories have been developed for mobile telephones that facilitate their handling by providing tethers, lanyards or handles. In one instance, a tether includes a length of cord defining a loop and having a fastener on one end extending between and attaching the loop and a housing of the mobile telephone. In this manner, a user of the mobile telephone can extend their fingers, or even entire hand, through the loop so that the mobile telephone dangles from their fingers or wrist.

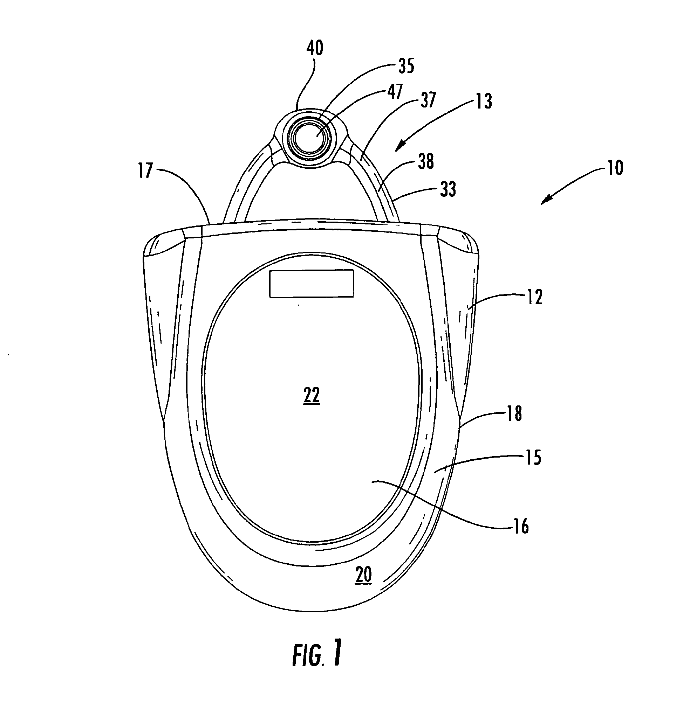

Tethers, handles and lanyards can have additional functions beyond facilitating handling of the mobile telephone. For instance, PCT publication WO 01/22526 to Ritter ("Ritter") discloses a mobile telephone with a yoke antenna. In particular, as shown in Figure 1 of Ritter, the telephone includes a housing **10** and a yoke **25** consisting of two metal wires **21, 22** and a non-conductive connecting portion **23.** The yoke has ends that attach to corners **17, 18** of the housing so as to form a loop. In addition to being able to support the rest of the mobile station, the metal wires serve as separate transmitting or receiving antennas.

EP0993068 A1 discloses a mobile wireless device including a hand strap made of a flexible conductive material and formed in a ring shape.

Despite the advantages of the above-listed devices, further improvements in the aesthetic appearance, ease of use and transportability of mobile stations are always desirable. Therefore, it would be advantageous to have a handle for a mobile station that facilitates handling of the mobile station while at the same time providing additional useful functions.

### SUMMARY

The present invention addresses the above needs and achieves other advantages by providing a bangle or handle for mounting to a mobile station. According to the invention, the handle comprises a loop of resilient compressible material having a first portion for mounting in the housing and a second portion for extending out of the housing and capable of supporting the housing, the loop comprising a communications element extending therethrough, wherein the first portion is configured to be press fit into a channel defined by said housing and including at least one conducting contact positioned to overlie a conducting contact of the mobile station positioned within the channel defined by the housing.

The handle may also include a conducting element that extends through the loop and is in communication with a conducting contact of the loop. The conducting contact of the continuous loop can be positioned in overlying contact with a conducting contact of the housing of the mobile station. Such contact supplies power or signals to, and receives power or signals from, a device such as a light, fan, noise generator or camera, connected to the second portion.

According to the invention, there is also provided a mobile station with a telecommunications assembly capable of receiving and generating wireless telecommunications signals, a power source capable of supplying power to the telecommunications assembly, a housing containing at least a portion of the telecommunications assembly and a handle as set out above.

Advantageously, the housing, and the rest of the mobile station, may be suspended from the second length portion.

The mobile station may also include a conducting element (e.g., wire, fiber optic filament or flexible printed circuit) that extends along the continuous loop of material and that is in conducting communication with the conducting contact of the portion. The conducting contact of the first portion may be constructed of a conductive elastomeric material that is configured to extend between the conducting contact of the housing and the conducting element. In another aspect, the conductive elastomeric material forms several spaced bands or contact portions that alternate with nonconductive material bands or contact portions of the first length portion to form a zebra-type conducting contact.

The mobile station may further include one or more electrically or optically operated devices for connection to the second portion of the continuous loop of the handle. For this purpose, the mobile station may also include a connecting element connected to the conducting element and capable of receiving one of the devices. As an example, the connecting element can be a circular collet defining an opening which is sized to receive the device and is spring-biased to retain the device. Examples of the devices include a light, a fan, a noise generator or a camera.

The housing of the mobile station may include a cover which extends over the channel and helps to hold the first portion of the continuous loop of material in the channel.

According to the invention, there is further provided a method of attaching a handle to a housing of a mobile station, said method comprising: inserting a first portion of a loop of material of the handle through the housing; establishing communication between an element within the housing and a communication element that extends through the loop of material such that the element within the housing can communicate external to the housing; suspending the housing from a second portion of the loop of material of the handle which extends out of the housing from ends of the first portion of the loop of material; and opening a cover portion of the housing to reveal a channel defined by the housing before inserting the first portion into the channel and replacing the cover after inserting the first portion into the channel.

The mobile station and handle of the present invention have many advantages. For instance, the handle can be used to support the mobile station from a wrist, wall-mounted peg, stand, clothes, etc., and is easily exchangeable with other handles having alternative aesthetic properties for customization of the mobile station. When not attached to the mobile station, the different types of handle can be worn as bracelets or jewelry due to their inherent flexibility and the continuous construction of the loop material. The functionality of the mobile station is also improved by the use of the various optical/electronic devices, such as the camera. Therefore, the interchangeability of the devices also allows functional, as well as the aforementioned aesthetic, customization. The conducting contact which uses the alternating contact portions of conducting elastomeric material allows the entire continuous loop of material to be flexible.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1 is a front elevation view of a mobile station and handle of one embodiment of the present invention;
Figure 2 is rear elevation view of the mobile station and handle of Figure 1;
Figure 3 is an exploded view of the mobile station of Figure 1;
Figure 4 is a perspective view of the handle of Figure 1;
Figure 5 is a rear elevation view of the handle of Figure 1;
Figure 6 is a cross-sectional view of the handle of Figure 1;
Figure 7 is another cross-sectional view of the handle of Figure 1;
Figure 8 is another exploded view of the mobile station and handle of Figure 1, including multiple optical/electronic devices of other embodiments of the present invention for connection to the handle; and
Figure 9 is a perspective view of a handle of another embodiment of the present invention.

### DETAILED DESCRIPTION

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

A mobile station **10** of one embodiment of the present invention includes a telecommunications assembly **11,** a housing **12** and a handle **13,** as shown in the accompanying Figures. Generally, the housing **12** contains the telecommunications assembly **11** and serves as a connection point for the handle **13** so that the handle can support the rest of the mobile station, such as from a user's wrist. It should be understood, that the mobile telephone illustrated and hereinafter described is merely illustrative of one type of mobile station that would benefit from the present invention and, therefore, should not be taken to limit the scope of the present invention.

For example, other types of mobile stations, such as portable digital assistants (PDAs), pagers, laptop computers and other types of voice and text communications systems, can readily employ the present invention. Moreover, the system and method of the present invention will be primarily described in conjunction with mobile communications applications. But the system and method of the present invention can be utilized in conjunction with a variety of other applications, both in the mobile communications industries and outside of the mobile communications industries.

Generally, the housing **12** supports a display, keys and other conventionally known components (battery, microphone, processor, etc.) necessary for the mobile station to receive, process and generate wireless communications signals. Collectively, these components are referred to herein as the wireless telecommunications assembly which, being known to those of skill in the art, are not described in greater detail herein.

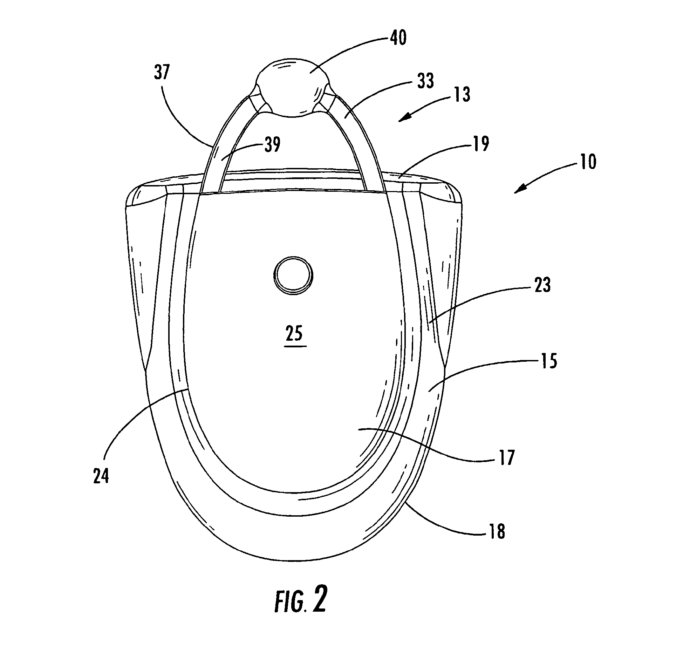

One embodiment of a suitable mobile station **10** is described below and shown in Figures 1 and 2. It should be understood, however, that the mobile station may have a wide variety of other shapes and form factors while still incorporating embodiments of the present invention. In the illustrated embodiment of Figures 1 and 2, the housing **12** includes a main body **15,** a keypad cover **16** and a battery cover **17.** The main body **15** contains the majority of the telecommunications assembly **11** and generally has a U-shape with rounded peripheral edges **18** that extend downwards from a mostly flat top peripheral edge **19.** Extending between the peripheral edges **18, 19** are opposing first and second faces **20** and **23,** respectively.

The first face **20** of the illustrated embodiment includes an inner edge **21** which defines a U-shaped recess so that the keypad cover, which itself has a U-shape, can be positioned within the recess. As a result, the inner edge of the first face **20** surrounds and abuts the edges of the keypad cover **16** so that an outer surface **22** of the keypad cover is flush with the first face. The second face **23** similarly has its own inner edge **24** which defines a U-shaped recess so that the battery cover **17,** which itself has a U-shape, can be positioned within the recess. In this manner, the second face **23** is flush with an outer surface **25** of the battery cover **17,** as shown in Figure 2.

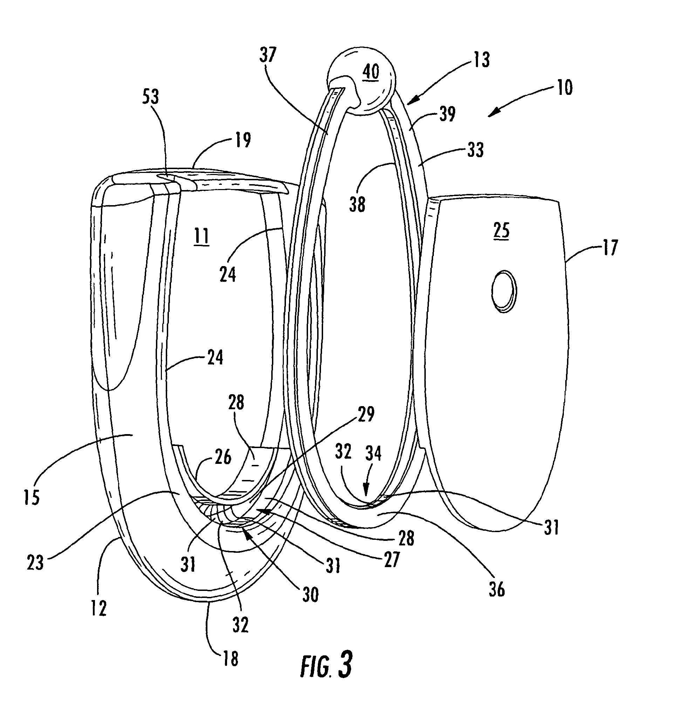

Referring now to Figure 3, wherein the battery cover **17** is separated from the main body **15** of the housing **12,** it can be seen that the housing includes a channel wall structure **26** defining a channel **27.** In particular, the channel wall structure **26** has a pair of opposing side walls 28 that extend upwards from a bottom wall **29.** The channel **27** defined by the walls **28, 29** has an arcuate shape that extends along the bottom trough of the U-shape of the inner edge **24** of the second face **23.** Extension of the side walls **28** upwards is to a height just short of the second face **23** by an amount approximately equal to a thickness of the battery cover **17** so that the battery cover will be supported in the above-described flush arrangement with the second face. In addition, closure of the battery cover results in the channel **27** being closed off, thereby facilitating retention of the handle **13,** as will be described in more detail below. A pair of notches **53** are defined by the main housing body **15** at the flat top edge **19** to allow the handle **13** to pass therethrough. Closure of the battery cover **17** is also facilitated by a recess **54** which provides clearance for the first portion **36** and side walls **28** of the channel wall structure **26.**

The housing may also include an electrical or optical conducting contact **30** that is connected in electrical or optical communication with the battery (not shown) or other power or processing source of the mobile station **10.** The conducting contact **30** includes a plurality of spaced contact portions **31** that are constructed of some type of conductive material, such as copper sheet, molded or shaped to conform with the inner surfaces of the channel wall structure **26.** In particular, each of the contact portions **31** extends in a strip along adjacent inner surfaces of the walls **28, 29** and are spaced from each other by similarly-shaped nonconductive portions **32.** In this manner, the alternating conductive and nonconductive portions, **31** and **32** respectively, form a "zebra" type conducting contact. The term "conducting" as used herein denotes the ability to transmit power and data signals using optical, electrical or other types of power and communications standards.

Advantageously, the zebra-type conducting contact **30** of the illustrated embodiment provides a robust electrical or optical connection with the handle **13** (as will be described in more detail below). However, it should be recognized that various configurations of conducting contact **30** could be employed as long as some type of electrical, optical, or other conducting connection is established. Materials used for the conducting contact can include conducting metals, polymers, composites, etc., as long as conducting contact can be made with a conducting contact of the handle **13.** Other geometries and positions could also be used for the conducting material(s) so as to facilitate engagement with the conducting contact of the handle. For instance, the entire channel wall structure **26** could be coated with a copper material.

The housing **12,** including its main body **15** and covers **22, 25** are preferably constructed of a relatively hard plastic material that is both light weight and protective. However, the housing is not necessarily limited to a collection of covers or any particular shape, material or configuration as long as the remaining components of the mobile station **10** are held together in a manner sufficient to operate and some portion of the housing **12** defines one or more channels. The term "channel" as used herein should be construed broadly and denotes any slot, groove or other opening, or plurality of openings, defined by one or more surfaces so as to be capable of receiving, and at least partially retaining, one or more portions of the handle **13.**

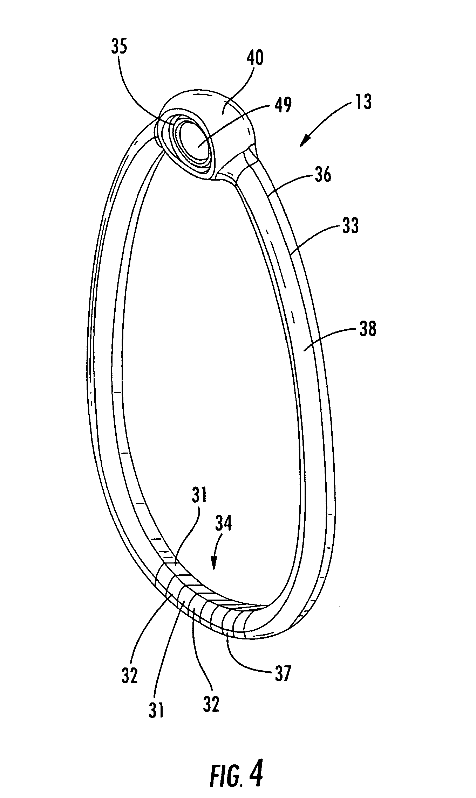

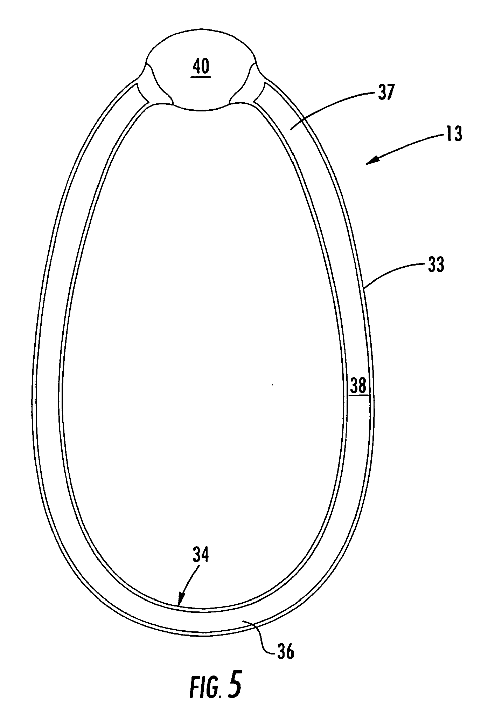

Referring now to Figures 4 and 5, the handle **13** includes a continuous loop of material **33.** Generally, a first length portion **36** of the continuous loop **33** of the handle **13** is sized and shaped to fit within the channel **27** of the housing **12** so that a second portion **37** extends outwards from the housing and can support the housing. The second length portion is spaced from the housing to allow the handle **13** to be gripped by a user, or for the mobile station to be otherwise suspended from the handle. The term "continuous loop" refers to the unbroken, closed circuit through which the handle as a whole extends. In the illustrated embodiment, the continuous loop of material **33** has a rounded, elliptical shape. However, this overall size and shape can be varied depending upon such factors as the desired size of the second length portion **37,** which could be enlarged to facilitate use, for instance, as a necklace. In another example, the second length portion could include a straight and thick sub-portion at its top end to facilitate easy gripping with a hand.

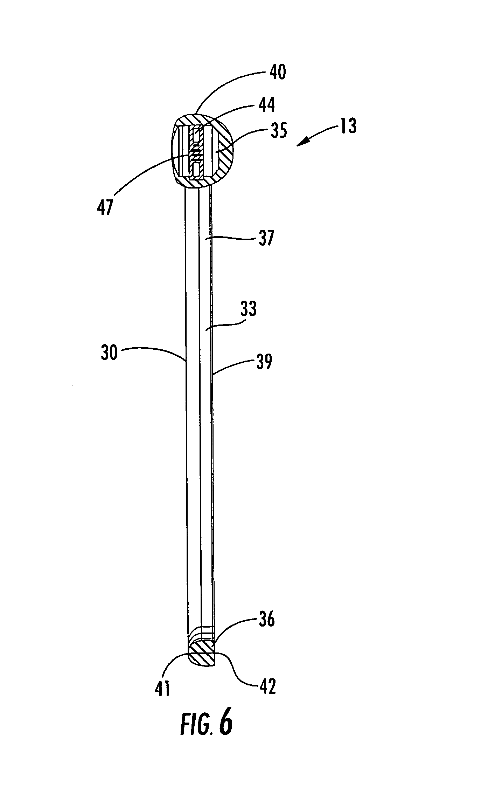

The continuous loop of material **33** of the illustrated embodiment generally has a cross-section that has one rounded surface **38** that extends between the edges of an opposite, flat surface **39,** as shown in Figure 6. In the illustrated embodiment, this same cross-section is constant along most of the continuous loop of material **33** with the exception of an optional bulbous portion **40** sized to hold a collet **35,** as will be explained in more detail below. The rounded surface **38** of the cross-section at the first length portion **36** facilitates its insertion into the channel **27** between the side walls **28.** The opposite flat surface **39** is then positioned flush with the top edges of the side walls **28,** allowing snug attachment of the overlying battery cover **17.**

Although the illustrated cross-section has several advantages, other cross-sectional shapes could be employed for the continuous loop of material **33.** For instance, square, elliptical or circular cross-sectional shapes could be used for the first length portion **36,** especially when these shapes match the cross-section of the channel **27** so as to promote a snug fit. In another example, the cross-section may vary along the length of the continuous loop of material **33** such as between the first and second length portions **36, 37** or even within the portions.

The first length portion **36** of the continuous loop of material **33** is preferably constructed of a material that has resiliently compressible properties, such as an elastomeric polymer or rubber material. The second length portion **37** may also be constructed of a deformable material so that the entire continuous loop of material **33** is flexible and deformable. Such properties facilitate insertion and retention of the first length portion **36** of the continuous loop of material **33** in the channel **27** of the housing **12.** In particular, on the way into the channel **27,** such as under finger pressure, the first length portion **36** deforms to slide between the side walls **28** until making contact with the bottom wall **29** of the channel wall structure **26.** The resilient nature of the material spring-biases the first length portion **36** outwards against the channel wall structure **26** to retain the first length portion within the channel **27.** Alternatively, or in addition to the use of resiliently compressible properties, the opposing side walls **28** may also be biased inwards against the first length portion **36.** It should be noted that resilient compressibility of the second length portion **37** is less important because it does not extend within the channel **27** making it more amenable to being constructed of a larger range of materials.

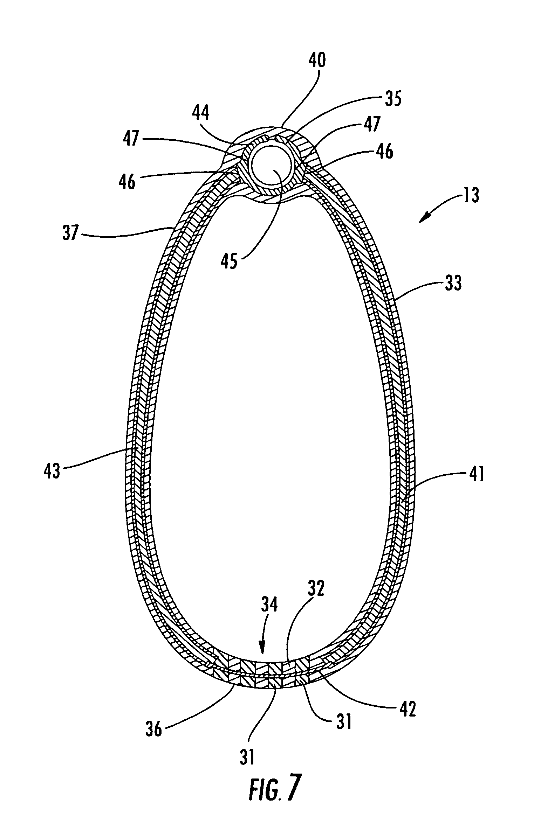

The handle **13** can also include optional electrical or optical components, such as the conducting contact **34,** the collet **35** and a conducting element **41,** as shown by the cross-sectional view in Figure 7. The conducting contact 34 of the handle **13** of the illustrated embodiment includes contact portions **31** that are constructed of optical, electrical or other conducting material spaced apart by nonconductive portions **32** to form a zebra-type contact with spacing similar to the conducting contact **30** of the housing **12.** In this manner, the contact portions **31** of the two contacts **30, 34** can overlie each other when the first length portion **36** is positioned in the channel **27,** thereby ensuring robust conductance between the handle **13** and other optical and electronic components of the mobile station **10.** Although the illustrated zebra-type contact **34** is preferred, other configurations of conducting materials can be used, such as wherein the entire first length portion **36** is a transparent, flexible, optically conducting material.

Referring again to Figure 7, the conducting element **41** includes a first portion, corresponding to the first length portion **36** of the continuous loop of material **33,** having a flexible printed circuit **42.** The flexible printed circuit extends through the contact **34** and connects at its ends to a second, primary conducting portion **43** which generally corresponds to the second length portion **37** of the continuous loop of material **33.** In turn, the primary conducting portion extends into contact with the collet **35** to facilitate the operation of various optical and/or electronic ("optical/electronic") devices, as will be described in more detail below. It should be noted that the conducting element **41** may be have a range of materials, shapes and configurations, such as being constructed of a single conducting material without separate portions, e.g., a continuous line of fiber optic cable or copper cable, as long as it is capable of establishing power or data communication between one or more of the optical/electronic devices and the contacts **30, 34.** Preferably, however, the conducting element **41** is constructed of a flexible material so that the overall continuous loop of material **33** is flexible.

Another optical or electrical component of the handle **13** is the collet **35** which serves as a type of connecting element that facilitates interchangeable connection of various devices to the conducting element **41** of the handle. The collet **35** in the illustrated embodiment includes a cylindrical spring **45** having a pair of arms that extend around towards each other to define a central opening **45** into which it is possible to mount various devices. Ends of the conducting element **41** are in connection with laterally positioned mounts **46** of the collet **35** so as to establish communication with the collet and any devices inserted therein. The collet **35** may also include "exposed in mold" transceivers (optical or electrical) that facilitate transmission of signals through the collet between the conducting element **41** and the devices.

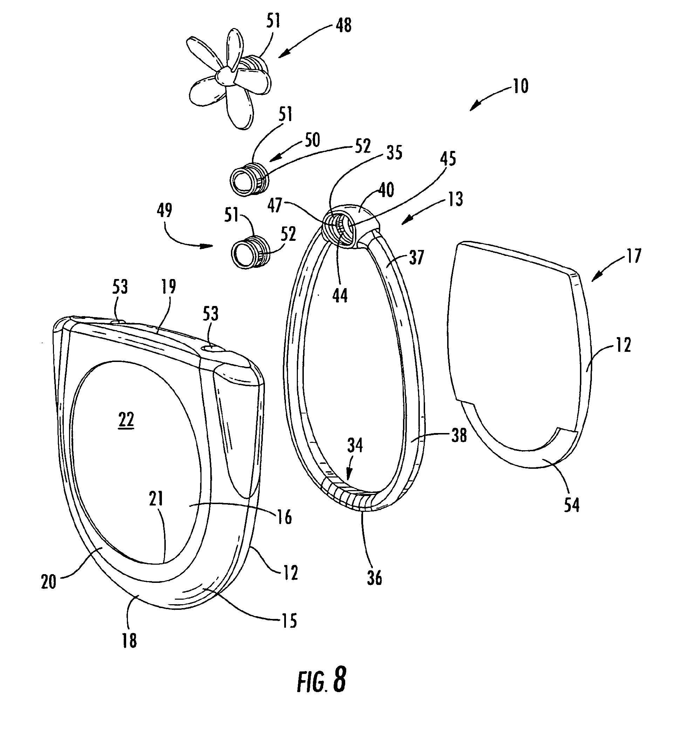

As mentioned above, various optical/electronic devices may be employed with the handle **13** wherein the handle serves as a power or communications connection between the devices and the rest of the mobile station **10.** Examples of these devices include a noisemaker or fan **48,** a camera **49** and a light **50,** as shown in Figure 8. Other examples of the devices include antenna, charging contacts, scent-emitters, bubble blowers and other polysensorial effects.

Although one or more of the optical/electronic devices may be integrated with the rest of the handle **13,** the devices are preferably interchangeably mountable in some type of connecting element, such as the collet **35** of the illustrated embodiment. Other types of connecting elements could be used, however, for interchangeability, such as various plugs, spring-biased receptacles or clips. Interchangeability using the collet **35** is facilitated by each of the devices having a similarly shaped, cylindrical male connector end **51** that is slightly oversized with respect to the resting diameter of the collet central opening 45 so as to bias the arms of the cylindrical spring **44** outwards upon insertion. This bias serves to retain the inserted optical/electronic device while still allowing removal and replacement with other devices. Each of the illustrated devices also includes its own contact rim **52** that overlies the transceivers **47,** or otherwise makes contact with, conducting aspects of the collet **35** upon insertion therein.

During installation, the handle **13** is attached to the housing **12** of the mobile station **10** by first opening the battery cover **17** to reveal the channel **27** as defined by the channel wall structure **26.** The handle **13** is then oriented so that the first length portion **36,** and hence the electrical contact **34,** of the continuous loop **33** is adjacent the channel **27,** with the rounded surface **38** facing the channel wall structure **26.** Pressure is applied to the opposite flat surface **39** to urge the first length portion **36** between the side walls **28** until reaching the bottom wall **29.** During insertion, the user preferably positions the contact portions **31** of the continuous loop conducting contact **34** in registration with the contact portions of the conducting contact **30** of the housing **12** so as to promote optimal signal and/or power transmission between the handle **13** and the rest of the mobile station **10.**

Once the first length portion **36** has been inserted into the channel **27,** the cover can be closed into a flush arrangement with the main body **15** of the housing **12** thereby concealing the handle attachment. Before closing, if necessary, the user may also insert a battery to provide power to the mobile station **10** and any devices attached to the handle **13.** If not attached, one of the optical/electronic devices can be inserted into the collet **35** by positioning the male connector end **50** adjacent the central opening **45** of the collet. Then, the device is urged into the central opening until the contact rim **51** overlies the transceivers **47.** Such attachment results in power and/or data communication being established with the rest of the mobile station 10 through the handle **13.**

The mobile station **10** and handle **13** of the present invention have many advantages. For instance, the handle can be used to support the mobile station from a wrist, wall-mounted peg, stand, clothes, etc., and is easily exchangeable with other handles having alternative aesthetic properties for customization of the mobile station **10.** When not attached to the mobile station, the different types of handle **13** can be worn as bracelets or jewelry due to their inherent flexibility and the continuous construction of the loop material **33.** The functionality of the mobile station **10** is also improved by the use of the various optical/electronic devices, such as the camera **49.** Therefore, the interchangeability of the devices also allows functional, as well as the aforementioned aesthetic, customization. The conducting contact **34** which uses the alternating contact portions **31** of conducting elastomeric material allows the entire continuous loop of material **33** to be flexible.

In another embodiment, the handle **13** may also include optical or electronic components useful in a gaming environment. For instance, the handle **13** may include a memory card reader that is connectable to the memory card (or other type of memory storage, such as optical disks or flash memory) which contains information on in-game assets. For instance, the memory card may contain information that is the equivalent of an in-game object (e.g., swords and gold) or attributes (e.g., strength or intelligence of a character), in which case the handles may be collected, traded or used in a promotional give away. As another option, the memory card (or other memory storage medium) may be part of the handle **13.**

Some gaming environments in particular benefit from the assets conveyed by the handle and the memory card due to the persistence of assets in the game from session to session. For instance, in card based games (e.g., MAGIC: THE GATHERING) the playing cards have intrinsic value beyond the game due their abilities and rarity. As a result, these cards, similar to the above-described handles capable of defining attributes, are wagered, sold or traded. Other examples of games in which the handle **13** may be used include DUNGEONS AND DRAGONS, WIZARDS OF THE COAST and various Multi-User Dungeon (MUD) games. The MUD games include many players interconnected by a network which would allow the assets conferred by the handle **13** to be conveyed virtually amongst the players, e.g., via a trade or by dropping an asset to be found later by another player. Often, the MUD games are "online" or games accessible via a network. MUD may also refer to Multi-User Domain gaming scheme which contain elements of game play that occur on both the server and on the local client machine.

Online games typically use a client-server architecture wherein a computer program on the server controls the logic and maintains the state of the game in an online arena. The game logic is a set of instructions defining virtual objects in the game, such as castles, swords, etc. Included in the state of the game are characters and their attributes, including skill levels and assets of those characters. The state of the game may be maintained on a database coupled to the server which includes the names, skills, assets, etc., of the characters. The database may include the address location on the server of the code which defines the in-game asset. As a result, when the player loses an asset, the server program deletes the asset from the list and when the player gains an asset it is added to the list. The handle **13** of the present invention may include the code for a virtual asset to be added, or may contain the address of a first player's asset to be transferred to another player's list. In this manner, the handle becomes a tangible embodiment of a virtual asset in the virtual gaming world.

Introduction or transfer of the gaming assets into the virtual environment may be through a connection port in the gaming device, such as via the conducting contact **34** illustrated in the Figures. As another alternative, transfer may be via a non-contact interface such as through electron-inductance driven RFID tags, radio or other wireless communications. In one aspect, the connection may be established with only a single conducting contact using the wearer's body as a ground plane, such as is described in U.S. Patent No. 6,642,837 to Vigoda, et al., which is hereby incorporated herein by reference. The load, when using the body as a ground plane, is enough to send a sequence of bits, which, in the present case, may be a URL address which contains an in-game asset register number. Such an aspect establishes a personal area network (PAN) with the handle **13** that allows creation and/or upload of the virtual asset.

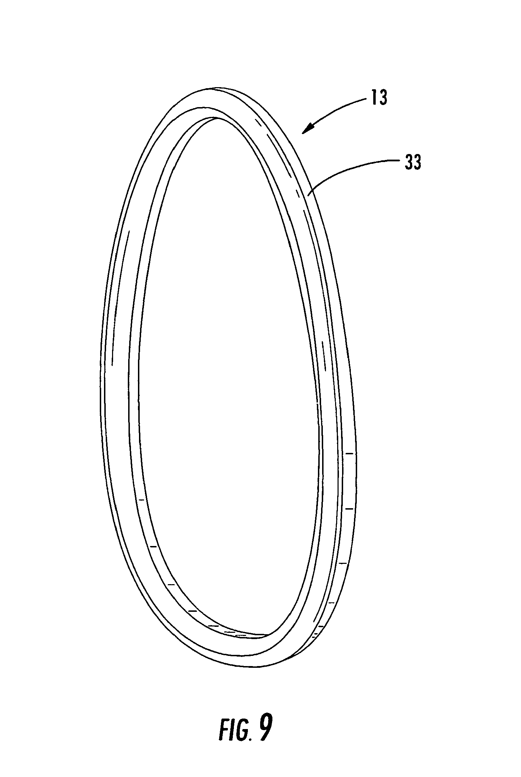

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. For instance, another embodiment of the present invention could include a handle **13** does not have optical/electronic components, as shown in Figure 9. In still another aspect, the handle could act as a high-gain antenna for longer and more reliable network connections, such as in areas with a weaker signal. Although specific terms are employed herein, they are used in a generic and descriptive sense only and not for purposes of limitation.

## Claims

1. A handle (13) for mounting to a mobile station (10), the mobile station having a housing (12), the handle comprising:
a loop of resilient compressible material (33) having a first portion (36) for mounting in the housing and a second portion (37) for extending out of the housing and capable of supporting the housing, the loop comprising a communications element extending therethrough, wherein the first portion is configured to be press fit into a channel (27) defined by said housing and including at least one conducting contact (34) positioned to overlie a conducting contact (30) of the mobile station positioned within the channel (27) defined by the housing.

2. A handle according to claim 1, further comprising a connecting element (35) carried by said loop and in communication with said communications element.

3. A handle according to claim 2, wherein the communications element comprises a conducting element (41) extending along the loop of compressible material and in electrical communication with the conducting contact (34) of the first portion.

4. A handle according to claim 2 or 3, wherein the conducting contact (34) of the first portion includes a conductive elastomeric material configured to extend between the conducting element (41) and the conducting contact (30) of the mobile station.

5. A handle according to claim 4, wherein the conductive elastomeric material forms several spaced contact portions (31) that alternate with nonconductive elastomeric material portions (32) of the first portion.

6. A handle according to claim 3, 4 or 5, wherein the conducting element (41) includes a printed circuit.

7. A handle according to any one of claims 3 to 6, further comprising a device engaged by said connecting element (35) and supported by the loop so as to be coupled in communication with the conducting element (41).

8. A handle according to claim 7, wherein the connecting element (35) is a spring-biased collet.

9. A handle according to claim 7 or 8, wherein the device is one of a light, a fan (48), a noise generator, a camera (49) and a memory device defining virtual assets.

10. A handle according to any one of the preceding claims, wherein the communications element includes an optical conductive element (41).

11. A mobile station (10) comprising:
a telecommunications assembly (11) capable of receiving and generating wireless telecommunications signals;
a power source capable of supplying power to the telecommunications assembly;
a housing (12) containing at least a portion of the telecommunications assembly; and
a handle (13) according to any one of the preceding claims.

12. A method of attaching a handle (13) to a housing (12) of a mobile station (10), said method comprising:
inserting a first portion (36) of a loop of material (33) of the handle (13) through the housing (12);
establishing communication between an element (30) within the housing and a communication element (41) that extends through the loop of material such that the element within the housing can communicate external to the housing;
suspending the housing (12) from a second portion (37) of the loop of material of the handle which extends out of the housing from ends of the first portion (36) of the loop of material; and
opening a cover portion (17) of the housing to reveal a channel (27) defined by the housing before inserting the first portion (36) into the channel and replacing the cover after inserting the first portion into the channel.

13. A method according to claim 12, wherein inserting the first portion (36) includes press fitting the portion into the channel (27).

14. A method according to claim 12 or 13, wherein inserting the first portion (36) includes positioning a conducting contact (34) of the first portion over a conducting contact (30) of the housing.

15. A method according to any one of claims 12 to 14, further comprising connecting a device to the second portion (37) of the loop of the handle such that the device is placed in communication via the communications element (41) with the conducting contact (30) of the housing.

16. A method according to claim 15, further comprising connecting a battery to the conducting contact (30) of the housing after inserting the first portion (36) to provide power to the device.

17. A method according to any one of claims 12 to 16, including communicating a virtual asset via the communication element (41) extending through the loop of material.

## Patentansprüche

1. Griff (13) zum Befestigen an einer Mobilstation (10), wobei die Mobilstation ein Gehäuse (12) aufweist, wobei der Griff umfasst:
eine Schleife aus nachgiebigem, komprimierbarem Material (33), die einen ersten Teil (36) zum Anbringen in dem Gehäuse aufweist und einen zweiten Teil (37), um sich aus dem Gehäuse zu erstrecken, und die in der Lage ist, das Gehäuse zu stützen, wobei die Schleife ein Verbindungselement umfasst, das sich durch diese erstreckt, wobei der erste Teil konfiguriert ist, um in einen Kanal (27) gepresst zu werden, der durch das Gehäuse festgelegt ist und wenigstens einen leitenden Kontakt (34) umfasst, der positioniert ist, um über einem leitenden Kontakt (30) der Mobilstation zu liegen, der in dem Kanal (27) positioniert ist, der durch das Gehäuse festgelegt wird.

2. Griff gemäß Anspruch 1, welcher ferner ein Anschlusselement (35) umfasst, das von der Schleife getragen wird und in Verbindung mit dem Verbindungselement steht.

3. Griff gemäß Anspruch 2, wobei das Verbindungselement ein leitendes Element (41) umfasst, das sich entlang der Schleife aus komprimierbarem Material und in elektrischer Verbindung mit dem leitenden Kontakt (34) des ersten Teils erstreckt.

4. Griff gemäß Anspruch 2 oder 3, wobei der leitende Kontakt (34) des ersten Teils ein leitendes elastomeres Material umfasst, das konfiguriert ist, um sich zwischen dem leitenden Element (41) und dem leitenden Kontakt (30) der Mobilstation zu erstrecken.

5. Griff gemäß Anspruch 4, wobei das leitende elastomere Material mehrere beabstandete Kontaktteile (31) bildet, die sich mit nichtleitenden elastomeren Materialteilen (32) des ersten Teils abwechseln.

6. Griff gemäß Anspruch 3, 4 oder 5, wobei das leitende Element (41) eine gedruckte Schaltung umfasst.

7. Griff gemäß einem der Ansprüche 3 bis 6, welcher ferner eine Vorrichtung umfasst, die in das Anschlusselement (35) eingerastet ist und von der Schleife gestützt wird, um in Verbindung mit dem leitenden Element (41) gekoppelt zu werden.

8. Griff gemäß Anspruch 7, wobei das Anschlusselement (35) eine federvorgespannte Klemmbuchse ist.

9. Griff gemäß Anspruch 7 oder 8, wobei die Vorrichtung eines ist aus: ein Licht, ein Ventilator (48), ein Geräuschgenerator, eine Kamera (49) und eine Speichervorrichtung, die virtuelle Vermögen festlegt.

10. Griff gemäß einem der vorhergehenden Ansprüche, wobei das Verbindungselement ein optisch leitendes Element (41) umfasst.

11. Mobilstation (10), welche umfasst:
eine Telekommunikationsanordnung (11), die in der Lage ist, drahtlose Telekommunikationssignale zu empfangen und zu erzeugen;
eine Stromquelle, die in der Lage ist, Strom der Telekommunikationsanordnung zuzuführen;
ein Gehäuse (12), das wenigstens einen Teil der Telekommunikationsanordnung enthält; und
einen Griff (13) gemäß einem der vorhergehenden Ansprüche.

12. Verfahren zum Anbringen eines Griffs (13) an ein Gehäuse (12) einer Mobilstation (10), wobei das Verfahren umfasst:
Einführen eines ersten Teils (36) einer Materialschleife (33) des Griffs (13) durch das Gehäuse (12);
Aufbauen einer Verbindung zwischen einem Element (30) in dem Gehäuse und einem Verbindungselement (41), das sich durch die Materialschleife erstreckt, so dass das Element in dem Gehäuse extern mit dem Gehäuse kommunizieren kann;
Aufhängen des Gehäuses (12) an einem zweiten Teil (37) der Materialschleife des Griffs, der sich aus dem Gehäuse von Enden des ersten Teils (36) der Materialschleife erstreckt; und
Öffnen eines Abdeckteils (17) des Gehäuses, um einen Kanal (27) offenzulegen, der durch das Gehäuse definiert wird, vor Einführen des ersten Teils (36) in den Kanal und Ersetzen der Abdeckung nach Einführen des ersten Teils in den Kanal.

13. Verfahren gemäß Anspruch 12, wobei Einführen des ersten Teils (36) ein Einpressen des Teils in den Kanal (27) umfasst.

14. Verfahren gemäß Anspruch 12 oder 13, wobei Einführen des ersten Teils (36) ein Positionieren eines leitenden Kontakts (34) des ersten Teils über einem leitenden Kontakt (30) des Gehäuses umfasst.

15. Verfahren gemäß einem der Ansprüche 12 bis 14, welches ferner umfasst Anschließen einer Vorrichtung an den zweiten Teil (37) der Schleife des Griffs, so dass die Vorrichtung in Verbindung über das Verbindungselement (41) mit dem leitenden Kontakt (30) des Gehäuses gesetzt wird.

16. Verfahren gemäß Anspruch 15, welches ferner ein Verbinden einer Batterie mit dem leitenden Kontakt (30) des Gehäuses nach Einführen des ersten Teils (36) umfasst, um der Vorrichtung Strom zuzuführen.

17. Verfahren gemäß einem der Ansprüche 12 bis 16, welches ein Kommunizieren eines virtuellen Vermögens über das Verbindungselement (41) umfasst, das sich durch die Materialschleife erstreckt.

## Revendications

1. Poignée (13) à monter sur une station mobile (10), la station mobile étant dotée d'un boîtier (12), la poignée comprenant :
une boucle en matériau compressible résilient (33) ayant une première portion (36) à monter dans le boîtier et une seconde portion (37) à étendre hors du boîtier et capable de supporter le boîtier, la boucle comprenant un élément de communications s'étendant à travers elle, dans laquelle la première portion est configurée de façon à être installée par pression dans un canal (27) défini par ledit boîtier et comprenant au moins un contact conducteur (34) positionné de façon à venir sur un contact conducteur (30) de la station mobile positionné dans le canal (27) défini par le boîtier.

2. Poignée selon la revendication 1, comprenant en outre un élément de connexion (35) porté par ladite boucle et en communication avec ledit élément de communications.

3. Poignée selon la revendication 2, dans laquelle l'élément de communications comprend un élément conducteur (41) s'étendant le long de la boucle de matériau compressible et en communication électrique avec le contact conducteur (34) de la première portion.

4. Poignée selon les revendications 2 ou 3, dans laquelle le contact conducteur (34) de la première portion comprend un matériau élastomère conducteur, configuré de façon à s'étendre entre l'élément conducteur (41) et le contact conducteur (30) de la station mobile.

5. Poignée selon la revendication 4, dans laquelle le matériau élastomère conducteur forme plusieurs portions de contact espacées (31) qui alternent avec des portions de matériau élastomère non conducteur (32) de la première portion.

6. Poignée selon les revendications 3, 4 ou 5, dans laquelle l'élément conducteur (41) comprend un circuit imprimé.

7. Poignée selon l'une quelconque des revendications 3 à 6, comprenant en outre un dispositif mis en prise par ledit élément de connexion (35) et supporté par la boucle de façon à être raccordé en communication avec l'élément conducteur (41).

8. Poignée selon la revendication 7, dans laquelle l'élément de connexion (35) est une pince polarisée par ressort.

9. Poignée selon les revendications 7 ou 8, dans laquelle le dispositif est un des éléments suivants : une lumière, un ventilateur (48), un générateur de bruit, une caméra (49) et un dispositif de mémoire définissant des éléments virtuels.

10. Poignée selon l'une quelconque des revendications précédentes, dans laquelle l'élément de communication comprend un élément conducteur optique (41).

11. Station mobile (10) comprenant :
un dispositif de télécommunications (11) capable de recevoir et de générer des signaux de télécommunications sans fil ;
une source d'alimentation capable de fournir de l'électricité au dispositif de télécommunications ;
un boîtier (12) contenant au moins une portion du dispositif de télécommunications ; et
une poignée (13) selon l'une quelconque des revendications précédentes.

12. Procédé de fixation d'une poignée (13) à un boîtier (12) d'une station mobile (10), ledit procédé comprenant :
l'insertion d'une première portion (36) d'une boucle de matériau (33) de la poignée (13) à travers le boîtier (12);
l'établissement d'une communication entre un élément (30) dans le boîtier et un élément de communication (41) qui s'étend à travers la boucle de matériau, de sorte que l'élément dans le boîtier puisse communiquer extérieurement au boîtier ;
la suspension du boîtier (12) depuis la seconde portion (37) de la boucle de matériau de la poignée qui s'étend hors dudit boîtier, depuis les extrémités de la première portion (36) de la boucle de matériau; et
l'ouverture d'une portion de couverture (17) du boîtier afin de révéler un canal (27) défini par ledit boîtier, avant d'insérer la première portion (36) dans le canal et de replacer le couvercle après insertion de la première portion dans le canal.

13. Procédé selon la revendication 12, dans lequel l'insertion de la première portion (36) comprend l'installation par pression de la portion dans le canal (27).

14. Procédé selon les revendications 12 ou 13, dans lequel l'insertion de la première portion (36) comprend le positionnement d'un contact conducteur (34) de la première portion sur un contact conducteur (30) du boîtier.

15. Procédé selon l'une quelconque des revendications 12 à 14, comprenant en outre la connexion d'un dispositif à la seconde portion (37) de la boucle de la poignée, de sorte que le dispositif soit placé en communication par le biais de l'élément de communications (41) avec le contact conducteur (30) du boîtier.

16. Procédé selon la revendication 15, comprenant en outre la connexion d'une batterie au contact conducteur (30) du boîtier après insertion de la première portion (36), afin de fournir de l'électricité au dispositif.

17. Procédé selon l'une quelconque des revendications 12 à 16, comprenant la communication d'un élément virtuel, par le biais de l'élément de communication (41) s'étendant à travers la boucle de matériau.
